(19) Europäisches Patentamt
European Patent Office
Office européen des brevets

(11) **EP 4 442 662 A1**

(12) **EUROPEAN PATENT APPLICATION**
published in accordance with Art. 153(4) EPC

(43) Date of publication:
**09.10.2024 Bulletin 2024/41**

(21) Application number: **22901426.1**

(22) Date of filing: **01.12.2022**

(51) International Patent Classification (IPC):
$C03C\ 13/00$ (2006.01)  $C03C\ 25/30$ (2018.01)
$C03C\ 25/325$ (2018.01)  $C03C\ 25/326$ (2018.01)
$C03C\ 25/36$ (2006.01)  $D01F\ 9/08$ (2006.01)

(52) Cooperative Patent Classification (CPC):
C03C 13/00; C03C 25/30; C03C 25/325;
C03C 25/326; C03C 25/36; D01F 9/08

(86) International application number:
**PCT/JP2022/044478**

(87) International publication number:
**WO 2023/100996 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.12.2021 JP 2021196565**

(71) Applicant: **NIPPON SHEET GLASS COMPANY,
LIMITED**
**Tokyo 108-6321 (JP)**

(72) Inventors:
• **NAKAMURA, Aya**
  **Tokyo 108-6321 (JP)**
• **FUKUCHI, Hidetoshi**
  **Tokyo 108-6321 (JP)**

(74) Representative: **Hasegawa, Kan**
**Patentanwaltskanzlei Hasegawa**
**Untere Hauptstraße 56**
**85354 Freising (DE)**

(54) **GLASS FIBER STRAND**

(57) The glass fiber strand according to the present invention is a bundle of glass fibers. The glass fibers contain $SiO_2$, which forms a glass backbone, $Al_2O_3$, and an elastic modulus adjustment component for improving the elastic modulus, and have an impact-resistant structure.

FIG. 2

Circle indicating outer shape of glass fiber strand

Glass fiber strand

Binder

**Description**

TECHNICAL FIELD

The present invention relates to a glass fiber strand.

BACKGROUND ART

In recent years, resin-containing fiber materials have been used for various applications. For example, as shown in Patent Document 1, the resin-containing fiber materials may be used for a blade member of a wind turbine of wind power generation. The blade member of Patent Document 1 includes an attachment portion attached to a rotating shaft and a blade portion extending from the attachment portion. The blade portion is configured using, as an outer skin, a resin-containing fiber material in which carbon fibers are impregnated with a resin. By using such a resin-impregnated fiber material, both strength and lightweight properties are achieved.

Patent Document 2 discloses an example in which a resin-impregnated fiber material is used for a high-pressure gas tank. This high-pressure gas tank includes an outer wall composed of a plurality of layers including a resin-impregnated glass fiber sheet, thereby improving strength against an internal pressure.

PRIOR ART DOCUMENTS

PATENT DOCUMENTS

Patent Document 1: WO 2017/037930 A
Patent Document 2: Japanese Patent Laid-open Publication No. 2020-133781

SUMMARY OF THE INVENTION

PROBLEMS TO BE SOLVED BY THE INVENTION

However, in the wind turbine member of Patent Document 1, the resin-containing fiber material is used, but the carbon fibers having poor impact resistance are used as reinforcing fibers, and there is room for improvement. In the high-pressure gas tank of Patent Document 2, the resin-containing fiber material containing glass fibers is used, but higher impact resistance has been demanded in order to withstand the internal pressure of the high-pressure gas tank. The present invention has been made to solve this problem, and an object of the present invention is to provide a glass fiber strand capable of improving impact resistance performance.

MEANS FOR SOLVING THE PROBLEM

Item 1. A glass fiber strand being a bundle of a plurality of glass fibers,

in which each of the glass fibers contains

$SiO_2$, which forms a glass backbone,
$Al_2O_3$, and
an elastic modulus adjustment component for improving an elastic modulus of the glass fiber, and

the glass fiber strand has an impact-resistant structure.

Item 2. The glass fiber strand according to item 1, in which the glass fibers are disposed such that a density of the impact-resistant structure with respect to a circle constituting an outer shape of the glass fiber strand is lower than close packing.

Item 3. The glass fiber strand according to item 1, in which, when a radius of the glass fiber strand is R, a radius of each of the glass fibers is r, and the number of the glass fibers is n, the glass fibers are disposed to satisfy $R^2/(n \cdot r^2) < 0.8(\sqrt{3}\pi/6)$.

Item 4. The glass fiber strand according to item 1, in which an average fiber diameter of the glass fibers is 5 $\mu$m or more and 24 $\mu$m or less, and the number of the plurality of single glass fibers is 4000 or more and 10000 or less.

Item 5. The glass fiber strand according to any one of items 1 to 4, in which a content of $SiO_2$ is 55 mol% or more.

Item 6. The glass fiber strand according to any one of items 1 to 5, in which a content of MgO is 30 mol% or less.

Item 7. The glass fiber strand according to any one of items 1 to 6, further comprising a rare earth compound.

Item 8. The glass fiber strand according to any one of items 1 to 7, in which an elastic modulus of the glass fiber strand is 90 GPa or more.

Item 9. The glass fiber strand according to any one of items 1 to 8, in which the glass fiber strand has a crack resistance load of 300 g or more.

Item 10. The glass fiber strand according to any one of items 1 to 9, in which the glass fiber strand is included in a resin-impregnated glass fiber sheet used together with a reinforcing sheet in which carbon fibers are impregnated with a resin.

Item 11. The glass fiber strand according to any of items 1 to 10, in which the glass fiber strand is included in at least one layer constituting an outer wall of a high-pressure gas tank.

Item 12. The glass fiber strand according to any one of items 1 to 10, in which the glass fiber strand is included in at least one layer constituting an outer skin of a blade member of a wind turbine of wind power generation, a blade member of a propeller of a helicopter, or a blade member of a propeller of a drone.

Item 13. The glass fiber strand according to any of items 1 to 10, in which the glass fiber strand is included in at least one layer constituting a housing of a transportation vehicle.

ADVANTAGES OF THE INVENTION

According to the present invention, a glass fiber strand having impact resistance can be provided.

BRIEF DESCRIPTION OF THE DRAWINGS

Fig. 1 is a schematic view showing the closely packed structure of a glass fiber strand.
Fig. 2 is a schematic view showing a cross-sectional structure that is not the closely packed structure of the glass fiber strand.
Fig. 3 is a cross-sectional view of a blade member.
Fig. 4 is a cross-sectional view of a high-pressure gas tank.

EMBODIMENTS OF THE INVENTION

An embodiment of a glass fiber strand according to the present invention will be described. A glass fiber strand according to the present invention is obtained by bundling a plurality of glass fibers. Each of the glass fibers contains $SiO_2$, which forms a glass backbone, $Al_2O_3$, and an elastic modulus adjustment component for improving an elastic modulus of the glass fiber, and the glass fiber strand has an impact-resistant structure. Details will be described below. Hereinafter, % indicating the content rate of a glass component is all mol% unless otherwise specified.

<1. Components of glass fiber>

<1-1. $SiO_2$>

$SiO_2$ is a main component of the glass fiber, that is, a component forming a glass backbone, and the content rate thereof is set to, for example, the range of 50 to 70%. The content rate of $SiO_2$ is preferably 55% or more, more preferably 60% or more, and particularly preferably 62% or more. When the content rate of $SiO_2$ is too low, impact resistance and acid resistance represented by crack resistance to be described later may be deteriorated. Meanwhile, when the content rate of $SiO_2$ is too high, an elastic modulus (for example, Young's modulus) may be deteriorated. Therefore, the content rate of $SiO_2$ is preferably 67% or less, and more preferably 65% or less.

< 1-2. $Al_2O_3$>

$Al_2O_3$ contributes to the maintenance of the heat resistance and water resistance and the like of a glass composition, and is also a component that affects the devitrification temperature and viscosity of the glass composition, and the like. In particular, $Al_2O_3$ contributes to an increase in impact resistance to be described later. Therefore, the content rate of $Al_2O_3$ is set in the range of 10 to 26%. The content rate of $Al_2O_3$ is preferably 10% or more, more preferably 12% or more, and particularly preferably 15% or more. The content rate of $Al_2O_3$ may be 16% or more or even 17% or more in some cases. When the content rate of $Al_2O_3$ is too high, the liquid phase temperature of the glass composition is greatly increased, which may cause inconvenience in production. Therefore, the content rate of $Al_2O_3$ is preferably 24% or less, and more preferably 22% or less. The content rate of $Al_2O_3$ may be 20% or less or even 19% or less in some cases.

Particularly in consideration of mass production, the devitrification temperature of the glass composition is preferably sufficiently lower than the liquid phase temperature thereof. The content rate of $Al_2O_3$ suitable for sufficiently lowering the devitrification temperature below the liquid phase temperature is 11 to 15%, further 11 to 14%, and particularly 11.5 to 13.5%. As described later, in order to sufficiently lower the devitrification temperature as compared with the liquid phase temperature, an appropriate amount of $Li_2O$ and/or $B_2O_3$ may be added.

<1-3. Component for improving elastic modulus>

The glass fibers according to the present invention contain a component for improving the elastic modulus of the glass composition (elastic modulus adjustment component). Examples of such an elastic modulus adjustment component include an alkaline earth metal compound and a rare earth compound. Examples of the alkaline earth metal compound include MgO and CaO. Examples of the rare earth compound include $Y_2O_3$, $La_2O_3$, and $CeO_2$. As the elastic modulus adjustment component, at least one composition may be contained, and two or more compositions may be contained.

Hereinafter, description will be made.

(MgO)

MgO is a component that contributes to improvement of the elastic modulus (for example, Young's modulus) and affects the devitrification temperature and the viscosity and the like. MgO contributes to an increase in impact resistance to be described later. Therefore, the content rate of MgO can be set to, for example, the range of 15 to 30%. The content rate of MgO is preferably 17% or more, more preferably 18% or more, and particularly preferably 20% or more. The content rate of MgO may be 21% or more or even 22% or less in some cases. When the content rate of MgO is too high, the liquid phase temperature may be greatly increased. Therefore, the content rate of MgO is preferably 35% or less, and more preferably 30% or less. The content rate of MgO may be 28% or less or even 25% or less in some cases.

The content rate of MgO suitable for sufficiently lowering the devitrification temperature below the liquid phase temperature is 18 to 30%, and further 20 to 28%.

(CaO)

CaO is an optional component that contributes to the maintenance of water resistance and the like and that affects the devitrification temperature and the viscosity and the like, in addition to the adjustment of the elastic modulus (for example, Young's modulus). The content rate of CaO can be set to, for example, the range of 0 to 8%. It is preferable to add an appropriate amount of CaO from the viewpoint of lowering the liquid phase temperature. Therefore, CaO is preferably added (content rate: more than 0%), and the content rate thereof is preferably 0.1% or more, and more preferably 0.12% or more. The content rate may be 2% or more or even 3% or more in some cases. However, when the content rate of CaO is too high, the Young's modulus and acid resistance performance may be deteriorated. Therefore, the content rate of CaO is preferably 7% or less, and more preferably 5% or less. The content rate of CaO that is particularly suitable for improving the Young's modulus and the crack resistance is less than 1%.

(Total of MgO and CaO)

The total of the content rates of MgO and CaO is set in the range of 18 to 35%, and preferably 20 to 30%.

($Al_2O_3$/(MgO + CaO))

The molar ratio of $Al_2O_3$ to the total of the content rates of MgO and CaO is set to less than 1. This makes it easy to achieve both the high Young's modulus and the not-too-high liquid phase temperature. The molar ratio $Al_2O_3$/(MgO + CaO) is preferably 0.3 to 0.9, and particularly preferably 0.35 to 0.85. The molar ratio may be in the range of 0.4 to 0.7 or even 0.4 to 0.6 in some cases. However, the molar ratio $Al_2O_3$/(MgO + CaO) particularly suitable for improving the crack resistance is 0.7 or more and less than 1, further 0.7 or more and 0.9 or less, and particularly 0.8 or more and 0.9 or less.

(MgO/RO (Total amount of alkaline earth metal compound))

It was found that when the ratio of MgO/RO is improved, the acid resistance performance is improved. For example, MgO/RO is preferably 0.5 or more, and more preferably 0.7 or more.

(Rare earth compound)

Examples of the rare earth compound include $Y_2O_3$, $La_2O_3$, and $CeO_2$ as described above. The content rate of the rare earth compound can be set to, for example, the range of 0 to 8%. The content rate of the rare earth compound is preferably 0.1% or more, more preferably 1% or more, and particularly preferably 3% or more. When the content rate of the rare earth compound is too high, the acid resistance is weakened, and the batch cost may be increased. Therefore, the content rate of the rare earth compound is preferably 8% or less, and more preferably 6% or less.

<1-4. Other components>

In addition to the above components, the following components can be added to the glass fibers according to the present invention as necessary. However, the components to be added are not limited to the following components, and other components can be appropriately added.

($ZrO_2$)

$ZrO_2$ is a component for improving the acid resistance performance. The content rate of $ZrO_2$ can be set to, for example, the range of 0.1 to 3%. The content rate of $ZrO_2$ is preferably 0.1% or more, more preferably 0.3% or more, and particularly preferably 0.5% or more. When the content rate of $ZrO_2$ is too high, glass is easily crystallized, and as a result, devitrification may occur. Therefore, the content rate of $ZrO_2$ is preferably 3% or less, and more preferably 1.5% or less.

($TiO_2$)

$TiO_2$ is a component for improving the acid resistance performance. The content rate of $TiO_2$ can be set, for example, in the range of 0.1 to 3%. The content rate of $TiO_2$ is preferably 0.1 to 3% or more, more preferably 0.3% or more, and particularly preferably 0.5% or more. When the content of $TiO_2$ is too high, the uniformity of glass is lost, and devitrification may also occur in this case. Therefore, the content rate of $TiO_2$ is preferably 3% or less, and more preferably 1.5% or less.

($B_2O_3$)

$B_2O_3$ is an optional component that forms a glass backbone and affects properties such as the devitrification temperature and the viscosity. The content rate of $B_2O_3$ is set in the range of 0 to 3%. The addition of a trace amount of $B_2O_3$ may contribute to a decrease in the devitrification temperature. Therefore, it is preferable to add $B_2O_3$ (content rate: more than 0%), and the content rate thereof is preferably 0.1% or more, and particularly preferably 0.3% or more. The content rate may be 0.5% or more or even 0.7% or more in some cases. However, when the content rate of $B_2O_3$ is too high, the Young's modulus may be deteriorated. The content rate of $B_2O_3$ is preferably 2.5% or less, more preferably 2% or less, and particularly preferably 1.8% or less. The content rate may be 1.6% or less or even 1.5% or less in some cases. One of examples of the preferable range of the content rate of $B_2O_3$ is 0.1 to 1.6%.

($Li_2O$)

$Li_2O$ is a component that modifies a glass backbone, and is an optional component that affects properties such as the liquid phase temperature, the devitrification temperature, and the viscosity. The content rate of $Li_2O$ is set in the range of 0 to 3%. The addition of $Li_2O$ in this range is effective in lowering the devitrification temperature. Therefore, it is preferable to add $Li_2O$ (content rate: more than 0%), and the content rate thereof is preferably 0.1% or more, more preferably 0.2% or more, and particularly preferably 0.3% or more. The content rate may be 0.5% or more or even 0.7% or more in some cases. When the content rate of $Li_2O$ is too high, the Young's modulus may be deteriorated. Therefore, the content rate of $Li_2O$ is preferably 2.5% or less, more preferably 2% or less, and particularly preferably 1.8% or less. The content rate may be 1.6% or less and even 1.5% or less in some cases. One of examples of the preferable range of the content rate of $Li_2O$ is 0.2 to 2.5%, which is higher than the content rate of $Na_2O$.

(Na$_2$O)

Like Li$_2$O, Na$_2$O is an optional component that affects properties such as the liquid phase temperature, the devitrification temperature, and the viscosity. However, since Na$_2$O has a higher effect of lowering the Young's modulus than that of Li$_2$O, the content rate thereof is set in the range of 0 to 0.2%. It is desirable that Na$_2$O is basically not contained, but Na$_2$O is preferably added in the range of up to 0.2%, and more preferably up to 0.15%, for example, more than 0% and less than 0.1%, for refining a glass melt.

In the present specification, the content rate of the oxide of a transition element (ZrO$_2$, Y$_2$O$_3$, La$_2$O$_3$, or CeO$_2$ or the like) present with a plurality of valences in the glass fibers is calculated in terms of an oxide having the maximum oxidation number of the metal.

(Total of components described above)

The total of the content rates of the components (SiO$_2$, Al$_2$O$_3$, elastic modulus adjustment component) described above is preferably 95% or more, more preferably 97% or more, particularly preferably 98% or more, and especially preferably 99% or more. The total of the content rates may be more than 99.5%, more than 99.9%, and even 100% in some cases.

<2. Properties of glass fiber>

<2-1. Elastic modulus>

In an embodiment of the present invention, the elastic modulus of each of the glass fibers can be measured by the Young's modulus. The Young's modulus is preferably 90 GPa or more, more preferably 95 GPa or more, and particularly preferably 100 GPa or more. The upper limit of the Young's modulus is not particularly limited, but may be 110 GPa or less. The Young's modulus is measured as follows as bulk glass having the same composition rather than the glass fiber.

The Young's modulus is measured according to an ultrasonic pulse method described in Japanese Industrial Standards (JIS) R 1602-1995. Each test piece is a rectangular parallelepiped of 5 mm × 25 mm × 35 mm. The measurement is performed at room temperature in the air, and a model 25DL Plus manufactured by Panametrics is used as a measuring apparatus.

It is known that when comparing glass fibers with bulk glass made of the same glass composition as that of the glass fibers, the glass fibers usually have a relatively low elastic modulus. This is believed to be due to the fact that when the glass fibers are molded from a glass melt, the glass fibers are cooled much more quickly. However, since there is a positive correlation between the elastic modulus of each of the glass fibers and the elastic modulus of the bulk glass (elastic modulus measured according to JIS described above), it is reasonable to evaluate the properties of the glass fibers or the glass composition that is used for the glass fibers using the values measured according to JIS.

<2-2. Crack resistance>

In the present invention, a crack resistance load can be used as the index of the crack resistance. Specifically, the crack resistance load of the glass fibers is, for example, 300 g or more, preferably 400 g or more, and more preferably 500 g or more. Surprisingly, according to an embodiment of the present invention, it is also possible to provide a glass composition having a particularly high crack resistance load, for example, of 900 g or more, further 1000 g or more, and particularly 1200 g or more. The upper limit of the crack resistance load is not particularly limited, but may be 2000 g or less. A method for measuring the crack resistance load will be described in the section of Examples.

The crack resistance load was measured by a test in which a Vickers indenter was pressed against the mirror-polished surface of a glass sample. An apparatus used was a Vickers hardness tester manufactured by Akashi Seisakusho, Ltd. The glass sample was processed into a plate shape having parallel planes. The plane to be pressed by the indenter was mirror-polished by using a suspension of cerium oxide abrasives. The Vickers indenter was pressed against the mirror-polished surface for 15 seconds. 5 minutes after removal of the load, whether a crack occurred from the corner of a square indentation remaining in the surface of the glass sample was measured. Whether or not cracks occurred was determined by observation using a microscope incorporated in the Vickers hardness tester. The magnification of the microscope was 100. This measurement was performed 10 times, and a crack occurrence probability P was calculated by dividing the number of corners in which cracks occurred by 40, which was the total number of the measured corners. The above measurement was repeated by changing the load in the order of 50 g, 100 g, 200 g, 300 g, 500 g, 1000 g, and 2000 g until the probability reached 100% (P = 100%), and the crack occurrence probability P was obtained at each of the loads. Thus, two adjacent loads WH and WL, between which the probability of 50% (P = 50%) occurred, and the crack occurrence probabilities PH and PL at that time (PH < 50% < PL) were obtained. A straight line passing through two points (WH, PH) and (WL, PL) was drawn with the load and the crack occurrence probability as a horizontal axis and a vertical axis, respectively, and a load at the point of P = 50% was defined as the crack resistance load.

The crack resistance is mainly divided into two elements. One is impact resistance. The impact resistance is an element relating to whether or not the glass fibers are easily damaged. These also depend on the shapes of the glass fibers, the shape of the strand composed of the glass fibers, and the process by which the glass fibers and the strand are produced. The other is fracture toughness. The fracture toughness is resistance to fracture when a mechanical load is applied to a material having a crack defect, and it can be said that the larger the fracture toughness, the higher the crack resistance. In the present invention, with respect to the crack resistance and the impact resistance, attention is particularly focused on the relationship among the crack resistance, the shapes of the glass fibers, the shape of the strand composed of the glass fibers, and the process by which the glass fibers and the strand are produced.

<2-3. Acid resistance performance>

In an embodiment of the present invention, the acid resistance performance of the glass fibers can be evaluated, for example, by a method in accordance with JOGIS J06-1999. That is, a specific gravity gram of pulverized glass fibers is placed in a platinum basket, immersed in 80 ml of a sulfuric acid solution having a specific gravity of 1.2 in a flask, heated at 99°C for 60 minutes, dried at 120°C, and then weighed, and the weight reduction rate is measured. As a result, the weight reduction rate is desirably 0.4% or less, and more desirably 0.2% or less.

<2-4. Number of yards>

The fineness of the glass fibers is preferably, for example, 15 to 2400 tex (= 1 g/km) depending on the application.

<2-5. Average fiber diameter>

The average fiber diameter of the glass fibers is, for example, preferably 5 $\mu$m or more and 20 $\mu$m or less, and more preferably 7 $\mu$m or more and 13 $\mu$m or less. When the average fiber diameter is less than 5 $\mu$m, the single glass fibers are easily broken, which makes it difficult to improve the bending strength. Meanwhile, when the average fiber diameter of the glass fibers is more than 25 $\mu$m, the molding of a resin-impregnated glass fiber material to be described later, and the presence of the glass fibers in the vicinity of the surface of the resin-impregnated glass fiber material may cause irregularities to easily occur on the surface, leading to the deterioration of the appearance. The elastic modulus of the resin-impregnated glass fiber material may be deteriorated.

The method for measuring the average fiber diameter is not particularly limited, but for example, 20 fibers of a large number of glass fibers are randomly extracted, and enlarged with an optical microscope, Then, the diameters of the fibers are measured, and the average value thereof is taken as the average fiber diameter.

<3. Method for producing glass fibers>

The glass fibers as described above are produced by allowing a glass melt having a controlled viscosity to flow out the glass melt from a nozzle and winding the continuous fibers by a winding machine. The continuous fibers are cut to an appropriate length in use. The short glass fibers are produced by blowing off the glass melt by high-pressure air or a centrifugal force or the like.

<4. Glass fiber strand>

The glass fiber strand according to the present invention is formed by bundling, for example, 100 to 10,000 glass fibers, typically 200 to 4000 glass fibers, by a known method. For example, when glass fibers having an average fiber diameter of 5 $\mu$m or more and 11 $\mu$m or less are used, the number of single glass fibers constituting the glass fiber strand is preferably 200 or more and 4000 or less. As a result, since the average fiber diameter is reduced and the number of the single glass fibers bundled increases, the total surface area (outer peripheral surface) increases and the area of the glass fibers that can be bound to a binder increases. As a result, the bending strength can be improved while an appropriate bending elastic modulus is ensured. When the number of the glass fibers is less than 200, it is difficult to improve the bending strength while ensuring an appropriate bending elastic modulus. Meanwhile, when the number of the glass fibers is more than 4000, bushing used for spinning the glass fibers becomes large, and the equipment cost increases, which is not preferable.

A chopped strand obtained by cutting the strand into a predetermined length can also be formed. The length of the chopped strand is not particularly limited, and may be, for example, 1 to 25 mm, preferably 2 to 11 mm, and more preferably 3 to 6 mm. This strand is not coated with another material.

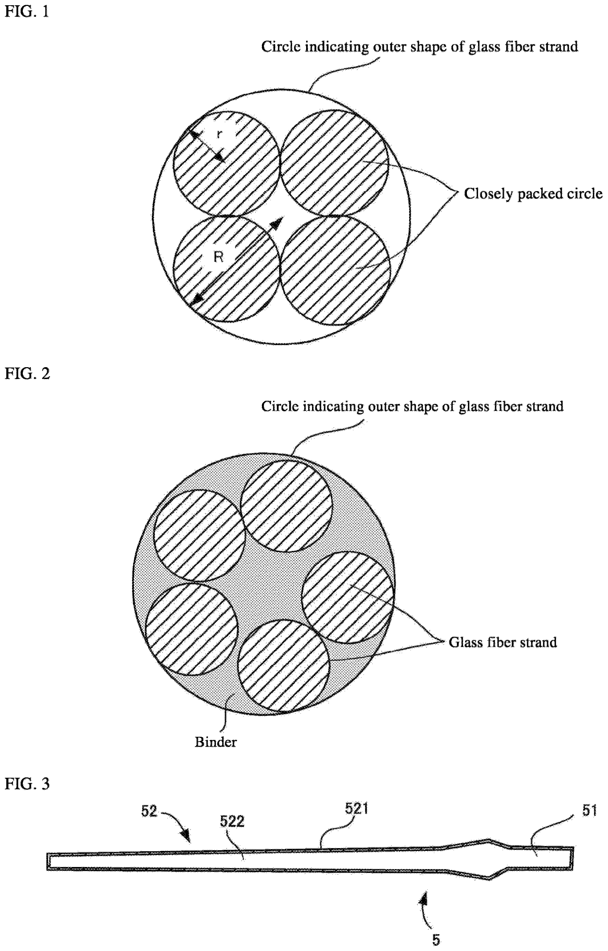

In the glass fiber strand according to the present invention, the n glass fibers are disposed such that a density of the impact-resistant structure with respect to a circle constituting the outer shape of the glass fiber strand is lower than that when n circles are disposed so as to be closely packed. For example, Fig. 1 shows a view in which four circles are disposed so as to be closely packed with respect to a circle constituting the outer shape of a glass fiber strand. Meanwhile, four glass fibers can be disposed at a density lower than the density of the close packing in Fig. 1. For example, the glass fibers can be disposed as in Fig. 2. In this case, for example, a binder can be filled between the glass fibers.

Specifically, when the radius of the glass fiber strand is denoted by R, radius of each of the glass fibers is denoted by r, and the number of the glass fibers is denoted by n, the glass fibers can be disposed so as to satisfy the following formula (1).

$$R^2/(n \cdot r^2) < 0.8 \, (\sqrt{3}\pi/6) \quad (1)$$

This point will be examined. For example, one glass fiber and two glass fibers having the same total cross-sectional area as the cross-sectional area of the glass fiber are taken as an example, and compared as shown in the following Table. Since these glass fibers have the same total cross-sectional area, the glass fibers can be regarded as having the same elastic modulus. However, the two glass fibers have a larger surface area per unit length (axial direction). That is, the area damaged by impact or the like is larger in the two glass fibers. Therefore, one glass fiber can be said to have higher impact resistance from the viewpoint of being less likely to be scratched. Therefore, in the glass fiber strand of the present invention, in order to reduce the surface area of contact, the glass fibers contained in one strand are disposed so as not to be closely packed with respect to the circle constituting the outer shape of the strand.

[Table 1]

|  | One glass fiber | Two glass fibers |
|---|---|---|
| Radius | r | $r/\sqrt{2}$ |
| Total cross-sectional area | $\pi r^2$ | $\pi r^2 = 2*\pi(r/\sqrt{2})^2$ |
| Surface area per unit length | $2\pi r$ | $2\sqrt{2}\pi r$ |

The fiber length with respect to the fiber diameter is referred to as an aspect ratio. It has been found that the larger the aspect ratio of the single fiber is, the higher the elastic modulus and strength of a composite material containing the glass fibers are.

Therefore, it is desirable that the diameter of each of the glass fibers is not too small from the viewpoint of easy damage, and it is preferable that the diameter is not too large from the viewpoint of improving the elastic modulus. It is important to select an appropriate fiber diameter.

<5. Resin-impregnated fiber material>

The glass fiber strand described above can be applied to a resin-impregnated fiber sheet. The resin-impregnated fiber sheet is a sheet in which a woven fabric, a nonwoven fabric, or a fiber bundle is formed of the glass fiber strand and is impregnated with a resin.

The resin with which the resin-impregnated fiber sheet is impregnated is not particularly limited, but for example, a thermosetting resin, a thermoplastic resin, or a photocurable resin can be used. Examples of the thermosetting resin include resins such as a urethane resin, a vinyl ester resin, and an epoxy resin. Examples of the thermoplastic resin include a polyethylene resin, a polypropylene resin, a polypropylene copolymer, a nylon resin, a polymethacrylic resin, a polyvinyl chloride resin, and a polycarbonate resin. Examples of the photocurable resin include an ultraviolet curable resin that is cured by irradiation with ultraviolet rays. As the resin with which the resin-impregnated fiber sheet is impregnated, these resins may be used alone, or a mixture of a plurality of kinds of resins may be used.

The thickness of the resin-impregnated fiber sheet is not particularly limited, but can be, for example, 1 to 10 mm. In addition to the sheet shape, for example, various shapes such as a block shape can be formed by laminating a plurality of sheets.

<6. Application of resin-impregnated fiber material>

<6-1. Blade member>

As a blade member, the resin-impregnated fiber material can be applied to, for example, a blade member of a wind turbine of wind power generation, a blade member of a propeller of a helicopter, and a blade member of a propeller of a drone, and the like. In the application of the blade member described here, a high elastic modulus is required. In addition, the blade member is always moving, and thus foreign matters may collide with the blade member, and thus crack resistance is required.

As shown in Fig. 3, a blade member 5 includes an attachment portion 51 attached to a rotating shaft and a blade body 52 extending from the attachment portion 5. The blade main body 52 is formed of an outer skin 521 and a core member 522 disposed in an internal space surrounded by the outer skin 521. The outer skin 521 is formed of at least one resin-impregnated fiber sheet. As the resin-impregnated fiber sheet, in addition to those containing the glass fibers described above, those containing carbon fibers and aramid fibers and the like as fibers can be used. For example, the outer skin 521 may be formed by laminating at least one resin-impregnated glass fiber sheet and at least one resin-impregnated carbon fiber sheet. At this time, by disposing a resin-impregnated carbon fiber sheet inside and a resin-impregnated glass fiber sheet outside, impact resistance against external impact can be enhanced. Alternatively, the outer skin 521 can be formed only of the resin-impregnated glass fiber sheet.

The configuration of the core member 522 is not particularly limited, but for example, can be composed of a beam body extending in a rod shape and a foam material disposed around the beam body.

By forming the outer skin 521 as described above, the following effects can be obtained. For example, when the outer skin is composed only of the resin-impregnated carbon fiber sheet, there is a problem that the strength of the outer skin against a load is secured due to the high elasticity of the carbon fiber, but the outer skin is weak against impact. There is a problem that the glass fibers of a conventional resin-impregnated glass fiber sheet do not have high impact resistance. Therefore, when the resin-impregnated glass fiber sheet is formed of the glass fiber strand having impact resistance as described above and high elasticity, the strength of the glass fiber strand against a load can be secured, and impact resistance can be obtained, so that the resin-impregnated glass fiber sheet is effective as the blade member.

When the elastic modulus of each of the glass fibers is high, the resin-impregnated carbon fiber sheet can be thinned, so that the cost can be reduced.

In particular, since the outer skin 521 of the blade member 5 has been thinned for weight reduction, a higher elastic modulus is required in order to prevent deformation due to its own weight or a centrifugal force. Furthermore, since the blade member is usually used outdoors, high crack resistance (impact resistance) is required in combination to maintain strength against the collision of foreign matters including birds and the like. Therefore, the blade member can achieve both strength and impact resistance.

<6-2. High-Pressure Tank>

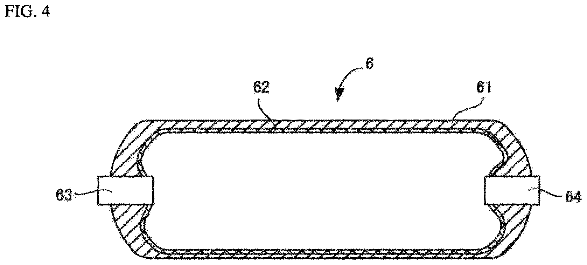

A high-pressure gas tank stores a high-pressure gas such as a compressed hydrogen gas or a compressed natural gas, and is formed in a cylindrical shape and provided with a ferrule 63 at each of both axial ends thereof, for example, as shown in Fig. 4. The outer wall of the high-pressure gas tank includes a liner 61 formed of a resin material such as polyamide, and a reinforcing layer 62 is formed inside the liner 61. The reinforcing layer 62 is formed by laminating a plurality of resin-impregnated fiber sheets, and may be formed by laminating at least one resin-impregnated glass fiber sheet and at least one resin-impregnated carbon fiber sheet, for example. At this time, the resin-containing carbon fiber sheet is disposed inside to ensure strength against the internal pressure of the tank. Meanwhile, the resin-impregnated glass fiber sheet is disposed outside and functions to protect the inside of the tank against impact applied to the surface of the tank from the outside. Alternatively, the reinforcing layer 62 can be composed only of the resin-impregnated glass fiber sheet.

In particular, in the case of storing the compressed hydrogen gas, it is advantageous to use glass fibers excellent in low-temperature resistance.

<6-3. Others >

The resin-impregnated glass fiber sheet according to the present invention can also be applied to housings of transportation vehicles such as a helicopter and a drone in addition to the blade member and the high-pressure gas tank described above. In particular, it is preferable to use the resin-impregnated glass fiber sheet for a portion corresponding to a floor in a housing.

<7. Features>

As described above, since the glass fibers constituting the glass fiber strand according to the present invention have a glass backbone formed of $SiO_2$, a high crack resistance load can be achieved. When an elastic modulus adjustment component such as MgO is contained, a high elastic modulus and high impact resistance performance can be achieved.

In the glass fiber strand according to the present invention, in order to reduce the surface area of contact between the glass fibers, the glass fibers contained in one strand are disposed so as not to be closely packed with respect to the circle constituting the outer shape of the strand. This makes each glass fiber less likely to be damaged, so that impact resistance can be improved.

For example, when the content of $SiO_2$ is 55% or more and the content of MgO is 30% or less, the glass fibers having a high elastic modulus and high impact resistance (crack resistance load) can be obtained.

EXAMPLES

Hereinafter, Examples of the present invention will be described. However, the present invention is not limited to the following Examples.

Glass fibers for glass fiber strands having compositions shown in Table 2 were prepared, and the Young's modulus (bulk elastic modulus) and crack resistance load of each of the glass fibers were evaluated.

[Table 2]

|  | Example 1 | Example 2 | Example 3 | Example 4 | Example 5 |
|---|---|---|---|---|---|
| SiO2 | 65.0 | 62.5 | 60.0 | 55.0 | 50.0 |
| Al2O3 | 15.0 | 15.0 | 15.0 | 15.0 | 15.0 |
| MgO | 20.0 | 22.5 | 25.0 | 30.0 | 35.0 |
| Young's modulus (GPa) | 97 | 99 | 100 | 104 | 108 |
| Crack resistance load (g) | 857 | 833 | 930 | 700 | 312 |

According to Table 2, the Young's modulus increases as the content of MgO increases. When the content of MgO increases to some extent, the crack resistance load also increases. However, when the content of $SiO_2$ decreases as the content of MgO increases, the crack resistance load decreases. Therefore, in order to achieve a high elastic modulus and high impact resistance (crack resistance load), for example, it is preferable to set the content of $SiO_2$ to 55% or more and 62.5% or less and the content of MgO to 22.5% or more and 30% or less.

**Claims**

1. A glass fiber strand being a bundle of a plurality of glass fibers,

   wherein each of the glass fibers contains

   $SiO_2$, which forms a glass backbone,
   $Al_2O_3$, and
   an elastic modulus adjustment component for improving an elastic modulus of the glass fiber, and

   the glass fiber strand has an impact-resistant structure.

2. The glass fiber strand according to claim 1, wherein the n glass fibers are disposed such that a density of the impact-resistant structure with respect to a circle constituting an outer shape of the glass fiber strand is lower than that when n circles are disposed so as to be closely packed.

3. The glass fiber strand according to claim 1, wherein, when a radius of the glass fiber strand is R, a radius of each of the glass fibers is r, and the number of the glass fibers is n, the glass fibers are disposed to satisfy $R^2/(n \cdot r^2) < 0.8(\sqrt{3}\pi/6)$.

4. The glass fiber strand according to claim 1, wherein an average fiber diameter of the glass fibers is 5 µm or more and 20 µm or less, and the number of the plurality of single glass fibers is 200 or more and 4000 or less.

5. The glass fiber strand according to any one of claims 1 to 4, wherein a content of $SiO_2$ is 55 mol% or more.

6. The glass fiber strand according to any one of claims 1 to 5, wherein a content of MgO is 30 mol% or less.

7. The glass fiber strand according to any one of claims 1 to 6, further comprising a rare earth compound.

8. The glass fiber strand according to any one of claims 1 to 7, wherein an elastic modulus of the glass fiber strand is 90 GPa or more.

9. The glass fiber strand according to any one of claims 1 to 8, wherein the glass fiber strand has a crack resistance load of 300 g or more.

10. The glass fiber strand according to any one of claims 1 to 9, wherein the glass fiber strand is included in a resin-impregnated glass fiber sheet used together with a resin-impregnated carbon fiber sheet in which carbon fibers are impregnated with a resin.

11. The glass fiber strand according to any of claims 1 to 10, wherein the glass fiber strand is included in at least one layer constituting an outer wall of a high-pressure gas tank.

12. The glass fiber strand according to any one of claims 1 to 10, wherein the glass fiber strand is included in at least one layer constituting an outer skin of a blade member of a wind turbine of wind power generation, a blade member of a propeller of a helicopter, or a blade member of a propeller of a drone.

13. The glass fiber strand according to any of claims 1 to 10, wherein the glass fiber strand is included in at least one layer constituting a housing of a transportation vehicle.

FIG. 1

Circle indicating outer shape of glass fiber strand

Closely packed circle

FIG. 2

Circle indicating outer shape of glass fiber strand

Glass fiber strand

Binder

FIG. 3

FIG. 4

# INTERNATIONAL SEARCH REPORT

International application No.

**PCT/JP2022/044478**

## A. CLASSIFICATION OF SUBJECT MATTER

*C03C 13/00*(2006.01)i; *C03C 25/30*(2018.01)i; *C03C 25/325*(2018.01)i; *C03C 25/326*(2018.01)i; *C03C 25/36*(2006.01)i; *D01F 9/08*(2006.01)i

FI: C03C13/00; C03C25/30; C03C25/325; C03C25/326; C03C25/36; D01F9/08 A

According to International Patent Classification (IPC) or to both national classification and IPC

## B. FIELDS SEARCHED

Minimum documentation searched (classification system followed by classification symbols)

C03C13/00; C03C25/30; C03C25/325; C03C25/326; C03C25/36; D01F9/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

INTERGLAD

## C. DOCUMENTS CONSIDERED TO BE RELEVANT

| Category* | Citation of document, with indication, where appropriate, of the relevant passages | Relevant to claim No. |
|---|---|---|
| X | JP 2013-542904 A (PPG INDUSTRIES OHIO, INC.) 28 November 2013 (2013-11-28) claims, paragraphs [0025], [0027], [0048], [0049], [0052], [0053], [0063], [0118], [0119], [0124]-[0151] | 1-2, 4-9, 12 |
| Y | | 10-11, 13 |
| A | | 3 |
| Y | JP 2020-128075 A (MITSUBISHI CHEMICAL CORP.) 27 August 2020 (2020-08-27) claims, paragraphs [0002], [0004], [0008] | 10 |
| Y | JP 2017-526607 A (PPG INDUSTRIES OHIO, INC.) 14 September 2017 (2017-09-14) claims, paragraphs [0108], [0115]-[0121] | 11, 13 |
| A | WO 2019/003464 A1 (NIPPON SHEET GLASS CO., LTD.) 03 January 2019 (2019-01-03) entire text, all drawings | 1-13 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 February 2023** | **28 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| | International application No. |
|---|---|
| | PCT/JP2022/044478 |

| Patent document cited in search report | | | Publication date (day/month/year) | Patent family member(s) | | | Publication date (day/month/year) |
|---|---|---|---|---|---|---|---|
| JP | 2013-542904 | A | 28 November 2013 | WO 2012/037219 A1 claims, specification, pp. 8, 9, 15, 16, 18, 22, 44, 46-57 JP 2014-530162 A JP 2010-513187 A JP 2013-151416 A US 2012/0058878 A1 US 2011/0053755 A1 US 2008/0146430 A1 US 2012/0060678 A1 US 2012/0060679 A1 US 2012/0064788 A1 WO 2012/037205 A1 WO 2012/037214 A1 WO 2013/036505 A1 WO 2008/073585 A1 TW 201217295 A TW 201223904 A TW 201224018 A CN 103153894 A CN 103153895 A CN 103153896 A KR 10-2013-0100312 A KR 10-2014-0005876 A KR 10-2014-0074246 A | | | |
| JP | 2020-128075 | A | 27 August 2020 | (Family: none) | | | |
| JP | 2017-526607 | A | 14 September 2017 | US 2016/0068428 A1 claims, paragraphs [0015], [0201], [0208]-[0215] WO 2016/040425 A1 TW 201615585 A CN 106795040 A | | | |
| WO | 2019/003464 | A1 | 03 January 2019 | US 2020/0140320 A1 entire text, all drawings EP 3647286 A1 CN 110809565 A | | | |

Form PCT/ISA/210 (patent family annex) (January 2015)

**REFERENCES CITED IN THE DESCRIPTION**

**Patent documents cited in the description**

- WO 2017037930 A
- JP 2020133781 A